# FASCICULE DE BREVET EUROPEEN

(11) **EP 1 801 441 B1**
(45) Date de publication et mention de la délivrance du brevet: **24.02.2010**
(21) Numéro de dépôt: 06301218.1
(22) Date de dépôt: 05.12.2006
(51) Int. Cl.: F16D 13/04, F16D 13/42

(54) **Embrayage monodisque sec pour boîte de vitesses de véhicule automobile à dispositif d'assistance à la fermeture**
Einscheibentrockenkupplung für Fahrzeuggetriebe mit Verstärkungvorrichtung für das Einkuppeln
Dry single-disc clutch for vehicle transmission with a device assisting clutch engagement

(30) Priorité: 22.12.2005 FR 0513111
(43) Date de publication de la demande: 27.06.2007
(73) Titulaire: Renault s.a.s., 92100 Boulogne-Billancourt (FR)
(72) Inventeur: Raoul, Michel, 78990 Elancourt (FR)
(74) Mandataire: Rougemont, Bernard

(56) Documents cités:
- GB-A- 321 637
- GB-A- 1 361 792
- US-A- 2 214 819
- US-A- 3 096 863

## Description

### DOMAINE TECHNIQUE AUQUEL SE RAPPORTE L'INVENTION

La présente invention concerne de manière générale le domaine des dispositifs de commande interne de boîte de vitesses pour véhicule automobile.

Elle concerne plus particulièrement un embrayage monodisque sec pour boîte de vitesses de véhicule automobile, comprenant une cloche d'embrayage, un premier plateau de pression et un deuxième plateau de pression respectivement fixe et mobile axialement par rapport à la cloche d'embrayage, et un dispositif de mise en pression qui, intervenant entre le deuxième plateau de pression mobile et la cloche d'embrayage, exerce sur ledit deuxième plateau de pression mobile un effort de serrage le poussant vers le premier plateau de pression fixe.

Dans cette position de serrage, dite position embrayée de l'embrayage, lesdits plateaux de pression sont en contact de frottement l'un avec l'autre de façon à assurer la transmission d'un couple moteur vers un arbre primaire de la boîte de vitesse.

### ARRIERE-PLAN TECHNOLOGIQUE

Dans les embrayages du type précité déjà connus, afin d'obtenir une pression de serrage suffisante sur les plateaux de pression, le dispositif de mise en pression comporte de gros ressorts à précharge élevée, disposés concentriquement aux plateaux de pression. Il peut être également prévu un dispositif de commande hydraulique d'un diaphragme qui prend appui sur le deuxième plateau de pression mobile.

L'implantation d'un dispositif de commande hydraulique à l'intérieur d'un carter de boîte de vitesses peut être relativement difficile et augmente le volume total de la transmission.

De même l'utilisation de gros ressorts concentriques à précharge élevée est coûteuse et augmente le volume de la transmission.

### OBJET DE L'INVENTION

On connaît également des documents GB1361792 et GB321637 des embrayages comportant des moyens d'amplification de l'effort de serrage appliqué sur le deuxième plateau de pression lors de la transmission d'un couple par les plateaux de pressions. Ces moyens d'amplifications sont formés dans le cas du document GB1361792 par des barres rigides en forme de L. Dans le document GB321637, il s'agit de dents d'engrenages rapportées sur des pièces intermédaires additionnelles de l'embrayage.

Le but de la présente invention est alors de proposer un nouvel embrayage monodisque sec permettant d'obtenir une pression de serrage satisfaisante sur les plateaux de pression en s'affranchissant d'un dispositif de commande hydraulique et en utilisant des ressorts à précharge modérée.

A cet effet, on propose selon l'invention un embrayage monodisque sec selon la revendication 1.

D'autres caractéristiques avantageuses et non limitatives de l'embrayage conforme à l'invention sont les suivantes :
- l'angle d'inclinaison desdites rampes inclinées est compris entre 30 et 60° par rapport à une direction axiale de déplacement relatif du deuxième plateau de pression et de la cloche d'embrayage ;
- une des rampes inclinées appartient à un tenon et l'autre rampe inclinée appartient à un siège recevant ledit tenon ;
- lesdits ressorts hélicoïdaux sont montés sur des pions axiaux ;
- les pions axiaux sont portés par la cloche d'embrayage;
- la cloche d'embrayage comporte des pattes, s'étendant radialement vers l'intérieur, qui portent lesdits pions axiaux ;
- la cloche d'embrayage est solidarisée au volant moteur ; et
- la cloche d'embrayage comprend des pattes s'étendant radialement vers l'extérieur, traversées par des vis de fixation vissées dans des logements taraudés prévus dans le volant moteur.

L'invention concerne également une boîte de vitesse pour véhicule automobile qui comprend un embrayage tel que précité.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en coupe partielle d'une boîte de vitesses d'un véhicule automobile montrant le montage d'un premier mode de réalisation d'un embrayage selon l'invention disposé à l'entrée de ladite boîte de vitesses dans une position embrayée ;
- la figure 2 est une vue équivalente à celle de la figure 1 dans une position débrayée de l'embrayage ;
- la figure 3 est une vue en coupe partielle d'une boîte de vitesses de véhicule automobile montrant le montage d'un deuxième mode de réalisation de l'embrayage selon l'invention disposé à l'entrée de ladite boîte de vitesses dans une position embrayée ;
- la figure 4 est une vue équivalente à celle de la figure 3 dans une position débrayée de l'embrayage ; et
- la figure 5 est une vue en coupe selon le plan A-A de la figure 1.

En préliminaire, on notera, que les éléments identiques ou similaires des différents modes de réalisation de l'invention, représentés sur les différentes figures, seront dans la mesure du possible référencés par les mêmes signes de référence et ne seront pas décrits à chaque fois.

En outre, dans la suite du texte, les directions « radial » et « axial » sont prises par rapport à l'axe X de l'arbre primaire 2 de la boîte de vitesses.

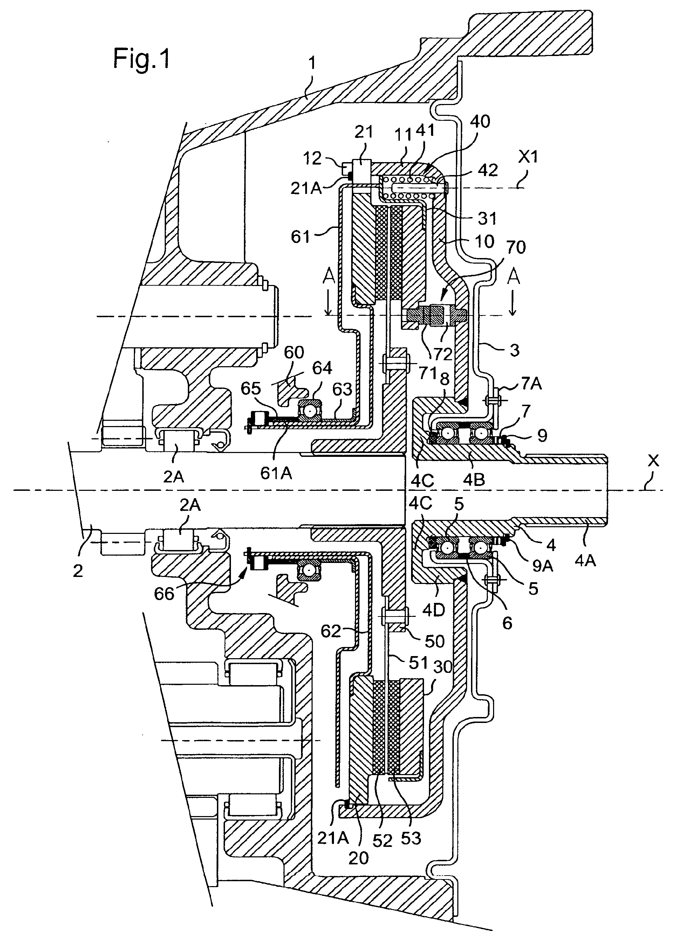

Sur les figures 1 à 4 on a représenté une boîte de vitesses comprenant un carter 1 à l'intérieur duquel est monté un embrayage monodisque sec disposé sur un arbre primaire 2 de la boîte de vitesses.

L'arbre primaire 2, s'étendant sensiblement suivant un axe X, est monté à une extrémité du carter 1 par l'intermédiaire d'un roulement 2A pouvant être par exemple un roulement à billes.

L'embrayage est pourvu d'un dispositif d'entrée.

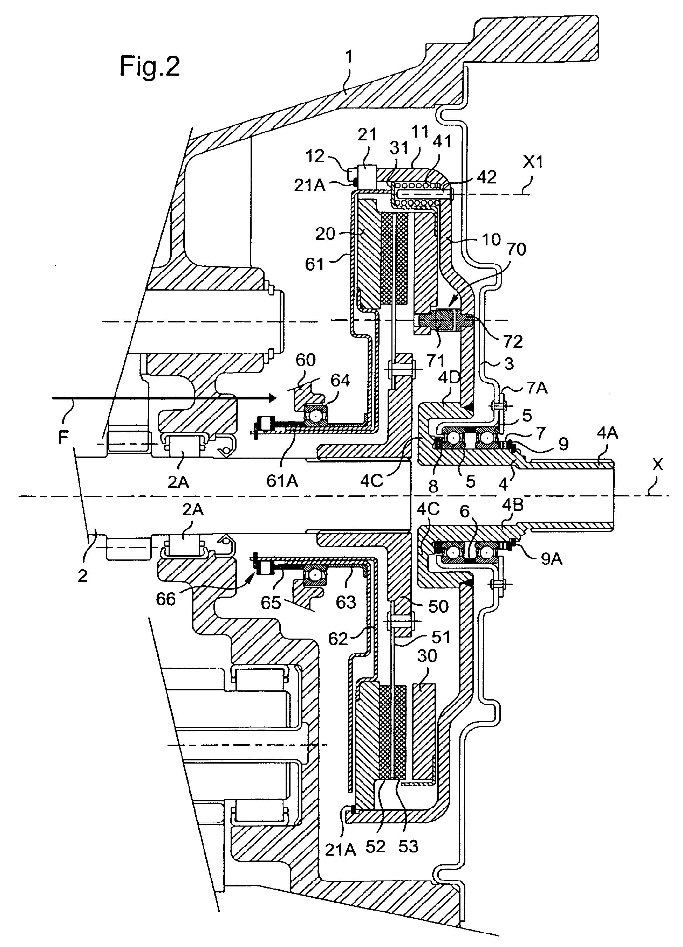

Selon le premier mode de réalisation représenté plus particulièrement sur les figures 1 et 2, le dispositif d'entrée comporte une cloche d'embrayage 10 solidarisée à un moyeu d'entrée 4 centré sur l'axe X de l'arbre primaire 2.

Le moyeu d'entrée 4 est monté dans un flasque d'embrayage 3 fixé sur le carter 1. Le flasque d'embrayage 3 et le carter 1 définissent intérieurement un volume dédié étanche ou non qui contient l'embrayage.

Ici, la cloche d'embrayage 10 est solidarisée par soudage à une extrémité du moyeu d'entrée 4.

Le moyeu d'entrée 4 comporte à une extrémité une partie tubulaire 4A, émergeant à l'extérieur dudit volume dédié, qui est cannelée pour recevoir le couple et le mouvement du moteur via un volant amortisseur non représenté.

À son autre extrémité située à l'intérieur du volume dédié, le moyeu d'entrée 4 comprend à l'extérieur, une portion radiale 4C prolongée par une portion axiale 4D qui entoure une partie tubulaire centrale 4B. La cloche d'embrayage 10 est soudée sur le bord libre de ladite portion axiale 4D.

La partie tubulaire centrale 4B du moyeu d'entrée 4 sert de palier de guidage et de retenue du flasque d'embrayage 3.

Le guidage du flasque d'embrayage 3 est réalisé par l'intermédiaire de deux roulements étanches 5, par exemple des roulements à billes. Ces roulements étanches 5 sont guidés extérieurement par le flasque d'embrayage 3 et sont séparés par une entretoise 6 afin d'augmenter la longueur du guidage. Les roulements étanches 5 sont bloqués axialement, à gauche sur la figure 1, par un retour du flasque d'embrayage 3, et, à droite sur la figure 1, par une rondelle 7A fixée sur le flasque d'embrayage 3 par exemple par des rivets.

Les roulements étanches 5 sont montés glissants sur la partie tubulaire centrale 4B du moyeu d'entrée 4 et sont maintenus axialement par un ensemble comprenant une rondelle ressort 7, une rondelle d'appui 9 et un anneau d'arrêt 9A. La rondelle ressort 7 permet d'appliquer une précharge contrôlée sur les roulements étanches 5, avantageuse pour le fonctionnement de l'ensemble. Cette rondelle ressort 7 permet également de pousser l'ensemble vers le flasque d'embrayage 3.

Entre le roulement étanche 5 situé à gauche sur la figure 1 et le moyeu d'entrée 4 est intercalée une rondelle de réglage 8 du positionnement axial de l'ensemble, cette rondelle de réglage 8 permettant le réglage de la garde d'usure.

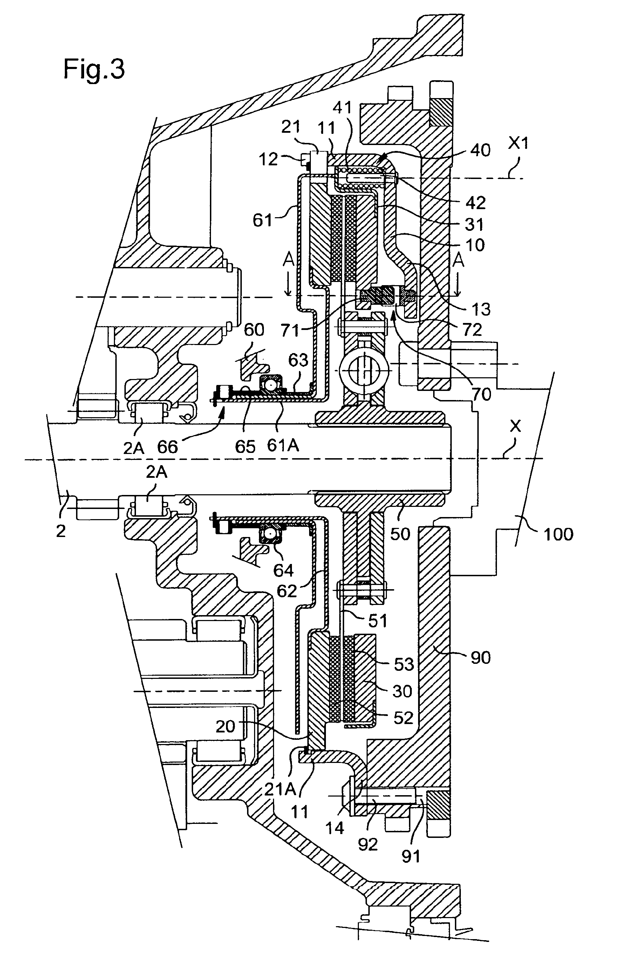

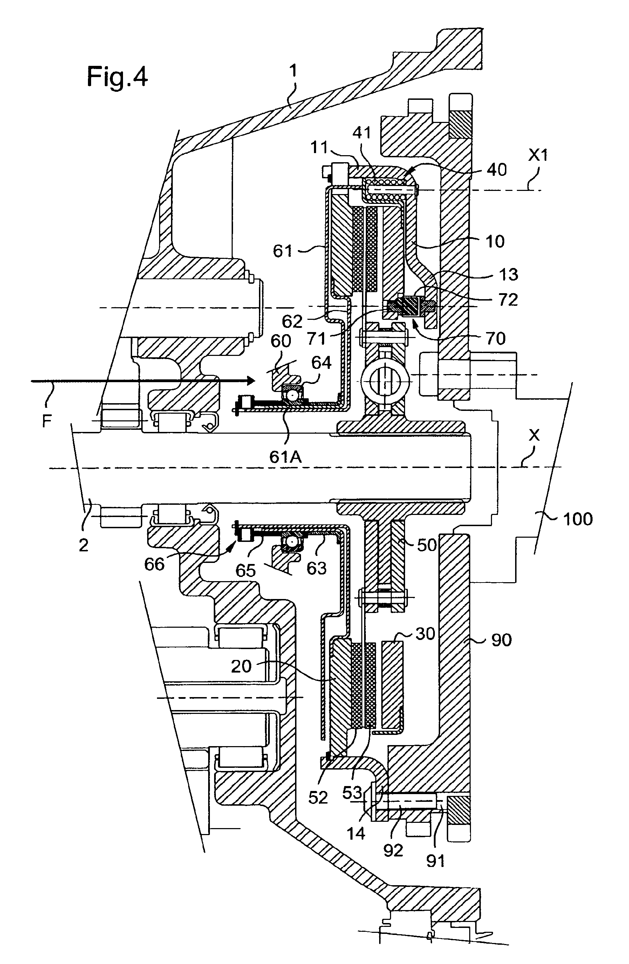

Selon le deuxième mode de réalisation de l'embrayage représenté plus particulièrement sur les figures 3 et 4, le dispositif d'entrée comprend uniquement la cloche d'embrayage 10 qui est avantageusement solidarisée directement au volant moteur 90 fixé sur le nez du vilebrequin 100.

Pour cela la cloche d'embrayage 10 comporte des pattes 14 s'étendant radialement vers l'extérieur, traversées par des vis de fixation 92 vissées dans des logements taraudés 91 prévus dans le volant moteur 90.

Selon les modes de réalisation représentés sur les figures 1 à 4, l'embrayage comporte un premier plateau de pression 20 fixe axialement par rapport à la cloche d'embrayage 10 et un deuxième plateau de pression 30 mobile axialement par rapport à la cloche d'embrayage 10.

Le premier plateau de pression 20 se présente sous la forme d'une couronne qui comporte sur son pourtour extérieur des crans radiaux 21 qui coopèrent avec des évidements axiaux 12 pratiqués à l'extrémité d'un retour axial 11 de la cloche d'embrayage 10.

Le premier plateau de pression 20 est en appui axial sur la cloche d'embrayage 10 par ses crans 21 en contact axial dans le fond des évidements 12. Il est maintenu dans cette position par un anneau d'arrêt 21 A.

Le premier plateau de pression 20 fixe est centré radialement dans la cloche d'embrayage 10. Dans sa partie intérieure est fixé radialement un guide de butée 62 qui comporte, d'une part, un flasque venant obturer l'ouverture centrale du premier plateau de pression 20, et, d'autre part, une partie cylindrique qui s'étend selon l'axe X à partir de son flasque.

Le deuxième plateau de pression 30 se présente sous la forme d'une couronne sur le bord extérieur de laquelle est rapportée une coupelle d'appui 31. Cette coupelle d'appui 31 assure également le centrage de ce deuxième plateau de pression 30 mobile dans la cloche d'embrayage 10.

L'embrayage représenté sur les figures 1 à 4 comporte un dispositif de friction qui transmet le mouvement des premier et deuxième plateaux de pression 20,30 à l'arbre primaire 2 de la boîte de vitesses.

Ce dispositif de friction comporte un moyeu central 50, monté fixe en rotation sur l'arbre primaire 2, sur lequel est fixé, par exemple par rivetage, un disque en tôle 51 sur lequel sont accrochés des éléments de friction 52,53 en forme de couronne.

L'embrayage représenté sur les figures 1 à 4 comporte un dispositif de mise en pression qui, intervenant entre le deuxième plateau de pression 30 et la cloche d'embrayage 10 exerce sur le deuxième plateau de pression 30 mobile un effort de serrage le poussant vers le premier plateau de pression 20 fixe de façon à le plaquer contre les deux éléments de friction 52,53 qui sont ainsi serrés contre ledit premier plateau de pression 20. De cette manière, l'embrayage est fermé.

Ici, le dispositif de mise en pression 40 comporte des ressorts hélicoïdaux 42 répartis sur la périphérie du deuxième plateau de pression 30 et montés sur des pions axiaux 42 (d'axe X1 parallèle à l'axe X) portés par la cloche d'embrayage 10.

Plus particulièrement, les ressorts hélicoïdaux 41 engagés sur les pions axiaux 42 prennent appui, d'une part, sur la coupelle d'appui 31 solidaire du deuxième plateau d'embrayage 30, et, d'autre part, sur la cloche d'embrayage 10. Ces ressorts hélicoïdaux 41 sont ici des ressorts de compression qui poussent axialement la coupelle d'appui 31 vers le premier plateau de pression 20 et donc le deuxième plateau de pression 30 contre les éléments de friction 52,53.

Selon le mode de réalisation de l'embrayage représenté plus particulièrement sur les figures 1 et 2, les pions axiaux 42 sont portés par une partie radialement extérieure de la cloche d'embrayage 10, et selon le mode de réalisation de l'embrayage représenté sur les figures 3 et 4, les pions axiaux sont portés par des pattes 13, s'étendant radialement vers l'intérieur, de la cloche d'embrayage 10.

Pour son ouverture, l'embrayage représenté sur les figures 1 à 4 comporte un dispositif de commande comprenant ici :
- une cloche d'ouverture 61 dont une partie axiale extérieure passe entre les crans radiaux 21 du premier plateau de pression 20 pour venir en appui sur la coupelle d'appui 31 liée au deuxième plateau de pression 30,
- un tube 61 A monté serré sur la partie cylindrique de guide de butée 62 afin d'augmenter sa longueur de guidage,
- une première entretoise 63, une rondelle de réglage de la position axiale d'un roulement étanche 64, une seconde entretoise de compensation 65, l'ensemble de ces éléments étant monté sur le tube 61 A,
- un ensemble 66composé d'une rondelle élastique et d'un dispositif d'arrêt qui maintient en contact les différents éléments montés sur le tube 61 A et qui maintient le contact de la cloche d'ouverture 61 sur la coupelle d'appui 31, et
- une fourchette de débrayage 60 qui applique un effort axial orienté selon la flèche F (opposé à l'effort axial exercé par les ressorts hélicoïdaux 41) sur le roulement étanche 64 de façon à pousser la cloche d'ouverture 61 sur la cloche d'appui 31 qui comprime les ressorts hélicoïdaux 41 du dispositif de pression afin d'écarter la coupelle d'appui 31 et donc le deuxième plateau de pression 30 des éléments de friction 52, 53 (voir figures 2 et 4).

Avantageusement, l'embrayage représenté sur les figures 1 à 4 comporte des moyens d'amplification 70 de l'effort de serrage appliqué sur le deuxième plateau de pression 30 par lesdits ressorts hélicoïdaux 41, qui, agissant entre le deuxième plateau de pression 30 et la cloche d'embrayage 10, sont aptes à provoquer un éloignement relatif dudit deuxième plateau de pression 30 et de la cloche d'embrayage 10 sous l'effet d'un couple transmis par les premier et deuxième plateaux de pression 20,30 serrés l'un contre l'autre.

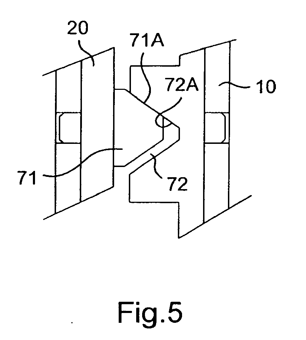

Comme le montre plus particulièrement la figure 5, ici, avantageusement, lesdits moyens d'amplification 70 comprennent au moins une rampe inclinée 71 A rattachée audit deuxième plateau de pression 30 apte à coopérer avec au moins une rampe inclinée complémentaire 72A rattachée à la cloche d'embrayage 10.

En particulier lesdits moyens d'amplification 70 comprennent plusieurs couples de rampes inclinées 71A,72A répartis régulièrement sur un cercle dont le centre est situé sur l'axe X.

Chaque rampe inclinée 71 A appartient ici à un tenon 71 fixé au deuxième plateau de pression 20 et chaque autre rampe inclinée 72A appartient à un siège 72 recevant ledit tenon 71 et fixé à la cloche d'embrayage 10.

Selon le mode de réalisation de l'embrayage représenté sur les figures 1 et 2, chaque siège 72 des moyens d'amplification 70 est fixé sur une partie radiale intérieure de la cloche d'embrayage 10, et selon le mode de réalisation de l'embrayage représenté sur les figures 3 et 4, chaque siège 72 des moyens d'amplification est fixé sur les pattes 13 s'étendant radialement vers l'intérieur de la cloche d'embrayage 10.

Avantageusement, l'angle d'inclinaison de chaque couple de rampes inclinées 71A,72A est compris entre 30 et 60 degrés par rapport à la direction axiale X de déplacement relatif du deuxième plateau de pression 30 et de la cloche d'embrayage 10.

Dans la position débrayée (embrayage ouvert), telle que représentée sur les figures 2 et 4, aucune pression axiale n'étant exercée sur les éléments de friction 52,53, le premier plateau de pression 20 entraîné en rotation par la cloche d'embrayage 10 glisse sur l'élément de friction 52 de sorte que le dispositif de friction n'est pas entraîné en rotation, et les couples de rampes inclinées 71 A, 72A des moyens d'amplification 70 tournent également avec la cloche d'embrayage 10 sans produire un quelconque effort axial sur le deuxième plateau de pression 30.

Dans la position embrayée (embrayage fermé), telle que représentée sur les figures 1 et 3, les premier et deuxième plateaux de pression 20,30 sont serrés par les ressorts hélicoïdaux 41 sur les éléments de friction 52,53 de sorte qu'ils transmettent le couple moteur donné par la cloche d'embrayage 10 au moyeu de friction 50 qui entraîne en rotation l'arbre primaire 2. Lors de la transmission de ce couple moteur, le couple moteur transite également via la cloche d'embrayage 10 vers le deuxième plateau de pression 30 par l'intermédiaire des tenon 71 et des sièges 72 dont les rampes inclinées sont positionnées les unes contre les autres. Les rampes inclinées 71A.72A coopèrent alors de sorte que le tenon et le siège correspondants se repoussent, en repoussant également le deuxième plateau de pression 30 sur les éléments de friction 52,53 serrés contre le premier plateau pression 20 en appui axial sur la cloche d'embrayage 10.

Chaque tenon et chaque siège forme ainsi des moyens d'amplification de l'effort de serrage appliqué sur le deuxième plateau de pression par les ressorts hélicoïdaux 41.

Les moyens d'amplification 70 permettent de modérer la précharge de ressorts hélicoïdaux 41 du dispositif de mise en pression 40 et d'atteindre une pression suffisante sur les deux plateaux de pression 20, 30 pour transmettre le couple moteur à l'arbre primaire 2.

La présente invention n'est nullement limitée aux modes de réalisation décrits et représentés mais l'homme du métier saura y apporter toutes variantes conforme aux revendications.

## Revendications

1. Embrayage monodisque sec pour boîte de vitesses de véhicule automobile, comprenant une cloche d'embrayage (10), un premier plateau de pression (20) et un deuxième plateau de pression (30) respectivement fixe et mobile axialement par rapport à la cloche d'embrayage, et un dispositif de mise en pression (40) qui, intervenant entre le deuxième plateau de pression (30) mobile et la cloche d'embrayage (10), exerce sur ledit deuxième plateau de pression (30) mobile un effort de serrage le poussant vers le premier plateau de pression (20) fixe, ledit embrayage comportant des moyens d'amplification (70) de l'effort de serrage appliqué sur le deuxième plateau de pression (30), qui, agissant entre ledit deuxième plateau de pression (30) et la cloche d'embrayage (10), sont aptes à provoquer un éloignement relatif dudit deuxième plateau de pression (30) et de ladite cloche d'embrayage (10) lors de la transmission d'un couple par lesdits plateaux de pression, et étant **caractérisé en ce que** lesdits moyens d'amplification (70) comprennent au moins une rampe inclinée (71A) rattachée directement audit deuxième plateau de pression (30) apte à coopérer avec au moins une rampe inclinée (72A) complémentaire rattachée directement à la cloche d'embrayage (10) et **en ce que** le dispositif de mise en pression (40) comprend des ressorts hélicoïdaux (41) qui prennent appui d'une partie sur la cloche d'embrayage (10) et d'autre part sur une coupelle d'appui (31) rapportée sur le bord extérieur du deuxième plateau de pression (30) sont répartis sur la périphérie dudit deuxième plateau de pression (30), et qui agissent indépendamment des moyens d'amplification (70).

2. Embrayage selon la revendication précédente, **caractérisé en ce que** l'angle d'inclinaison desdites rampes inclinées (71A,72A) est compris entre 30 et 60° par rapport à une direction axiale de déplacement relatif du deuxième plateau de pression et de la cloche d'embrayage.

3. Embrayage selon l'une des revendications 1 et 2, **caractérisé en ce qu'**une des rampes inclinées (71A) appartient à un tenon (71) et l'autre rampe inclinée (72A) appartient à un siège (72) recevant ledit tenon (71).

4. Embrayage selon l'une des revendications précédentes, **caractérisé en ce que** lesdits ressorts hélicoïdaux (41) sont montés sur des pions axiaux (42).

5. Embrayage selon la revendication 4, **caractérisé en ce que** les pions axiaux (42) sont portés par la cloche d'embrayage (10).

6. Embrayage selon la revendication 5, **caractérisé en ce que** la cloche d'embrayage (10) comporte des pattes (13), s'étendant radialement vers l'intérieur, qui portent lesdits pions axiaux (42).

7. Embrayage selon l'une des revendications précédentes **caractérisé en ce que** la cloche d'embrayage (10) est solidarisée au volant moteur (90).

8. Embrayage selon la revendication 7, **caractérisé en ce que** la cloche d'embrayage (10) comprend des pattes (14) s'étendant radialement vers l'extérieur, traversées par des vis de fixation (92) vissées dans des logements taraudés (91) prévus dans le volant moteur (90).

9. Boîte de vitesse pour véhicule automobile qui comprend un embrayage selon l'une des revendications précédentes.

## Claims

1. Dry single-disc clutch for a motor vehicle gearbox, comprising a clutch housing (10), a first pressure plate (20) and a second pressure plate (30) which are respectively fixed and movable axially with respect to the clutch housing, and a pressure application device (40) which, acting between the second movable pressure plate (30) and the clutch housing (10), exerts on the said second movable pressure plate (30) a clamping force pushing it towards the first fixed pressure plate (20), the said clutch comprising means (70) for amplifying the clamping force applied to the second pressure plate (30), which, acting between the said second pressure plate (30) and the clutch housing (10), are able to produce a relative separation of the said second pressure plate (30) and the said clutch housing (10) during the transmission of a torque via the said pressure plates, and being **characterized in that** the said amplification means (70) comprise at least one inclined ramp (71A) attached directly to the said second pressure plate (30) that is able to cooperate with at least one complementary inclined ramp (72A) attached directly to the clutch housing (10), and **in that** the pressure application device (40) comprises helical springs (41) which bear, on the one hand, on the clutch housing (10) and, on the other hand, on a bearing cup (31) attached to the outer edge of the second pressure plate (30), are distributed over the periphery of the said second pressure plate (30), and act independently of the amplification means (70).

2. Clutch according to the preceding claim, **characterized in that** the angle of inclination of the said inclined ramps (71A, 72A) is between 30 and 60° with respect to an axial direction of relative movement of the second pressure plate and the clutch housing.

3. Clutch according to either of Claims 1 and 2, **characterized in that** one of the inclined ramps (71A) belongs to a tenon (71) and the other inclined ramp (72A) belongs to a seat (72) receiving the said tenon (71).

4. Clutch according to one of the preceding claims, **characterized in that** the said helical springs (41) are mounted on axial pins (42).

5. Clutch according to Claim 4, **characterized in that** the axial pins (42) are carried by the clutch housing (10).

6. Clutch according to Claim 5, **characterized in that** the clutch housing (10) comprises tabs (13), extending radially inwards, which carry the said axial pins (42).

7. Clutch according to one of the preceding claims, **characterized in that** the clutch housing (10) is secured to the flywheel (90).

8. Clutch according to Claim 7, **characterized in that** the clutch housing (10) comprises tabs (14) extending radially outwards and traversed by fastening screws (92) screwed into tapped housings (91) provided in the flywheel (90).

9. Motor vehicle gearbox which comprises a clutch according to one of the preceding claims.

## Patentansprüche

1. Einscheibentrockenkupplung für ein Kraftfahrzeuggetriebe, umfassend eine Kupplungsglocke (10), eine erste Druckplatte (20) und eine zweite Druckplatte (30), die bezüglich der Kupplungsglocke feststehend bzw. axial beweglich sind, und eine Druckbeaufschlagungsvorrichtung (40), die durch Eingriff zwischen der zweiten, beweglichen Druckplatte (30) und der Kupplungsglocke (10) auf die zweite, bewegliche Druckplatte (30) eine Klemmkraft ausübt, die sie zu der ersten, feststehenden Druckplatte (20) drückt, wobei die Kupplung Mittel (70) zur Verstärkung der an die zweite Druckplatte (30) angelegten Klemmkraft aufweist, welche durch Wirken zwischen der zweiten Druckplatte (30) und der Kupplungsglocke (10) ein relatives Entfernen der zweiten Druckplatte (30) und der Kupplungsglocke (10) bei der Übertragung eines Drehmoments durch die Druckplatten bewirken können, **dadurch gekennzeichnet, dass** die Verstärkungsmittel (70) mindestens eine geneigte Rampe (71A) umfassen, die direkt an der zweiten Druckplatte (30) befestigt ist und mit mindestens einer komplementären, geneigten Rampe (72A) zusammenwirken kann, die direkt an der Kupplungsglocke (10) befestigt ist, und dass die Druckbeaufschlagungsvorrichtung (40) Schraubenfedern (41) umfasst, die einerseits an einem Teil an der Kupplungsglocke (10) und andererseits an einem Stützteller (31), der an dem Außenrand der zweiten Druckplatte (30) befestigt ist, anliegen, um den Umfang der zweiten Druckplatte (30) verteilt sind und unabhängig auf die Verstärkungsmittel (70) einwirken.

2. Kupplung nach dem vorhergehenden Anspruch, **dadurch gekennzeichnet, dass** der Neigungswinkel der geneigten Rampen (71A, 72A) zwischen 30 und 60° bezüglich einer axialen relativen Verschiebungsrichtung der zweiten Druckplatte und der Kupplungsglocke beträgt.

3. Kupplung nach einem der Ansprüche 1 und 2, **dadurch gekennzeichnet, dass** eine der geneigten Rampen (71A) zu einem Zapfen (71) gehört und die andere geneigte Rampe (72A) zu einem den Zapfen (71) aufnehmenden Sitz (72) gehört.

4. Kupplung nach einem der vorhergehenden Ansprüche, **dadurch gekennzeichnet, dass** die Schraubenfedern (41) an axialen Stiften (42) angebracht sind.

5. Kupplung nach Anspruch 4, **dadurch gekennzeichnet, dass** die axialen Stifte (42) von der Kupplungsglocke (10) getragen werden.

6. Kupplung nach Anspruch 5, **dadurch gekennzeichnet, dass** die Kupplungsglocke (10) Ansätze (13) aufweist, die sich radial nach innen erstrecken und die axialen Stifte (42) tragen.

7. Kupplung nach einem der vorhergehenden Ansprüche, **dadurch gekennzeichnet, dass** die Kupplungsglocke (10) fest mit dem Schwungrad (90) verbunden ist.

8. Kupplung nach Anspruch 7, **dadurch gekennzeichnet, dass** die Kupplungsglocke (10) Ansätze (14) umfasst, die sich radial nach außen erstrecken und von in in dem Schwungrad (90) vorgesehene Gewindeaufnahmen (91) geschraubten Befestigungsschrauben (92) durchquert werden.

9. Getriebe für ein Kraftfahrzeug, das eine Kupplung nach einem der vorhergehenden Ansprüche umfasst.
